# EUROPÄISCHE PATENTSCHRIFT

(11) **EP 4 045 971 B1**
(45) Veröffentlichungstag und Bekanntmachung des Hinweises auf die Patenterteilung: **07.06.2023**
(21) Anmeldenummer: 20792947.2
(22) Anmeldetag: 12.10.2020
(51) Int. Cl.: G02F 1/13357

(54) **DISPLAYSYSTEM UND VERFAHREN ZUM BETREIBEN EINES DISPLAYSYSTEMS**
DISPLAY SYSTEM AND METHOD OF OPERATING A DISPLAY SYSTEM
SYSTÈME D'AFFICHAGE ET PROCÉDÉ DE FONCTIONNEMENT D'UN SYSTÈME D'AFFICHAGE

(30) Priorität: 15.10.2019 DE 102019215869
(43) Veröffentlichungstag der Anmeldung: 24.08.2022
(73) Patentinhaber: Continental Automotive Technologies GmbH, 30165 Hannover (DE)
(72) Erfinder: LAHR, Torsten, 60488 Frankfurt am Main (DE); KABATEK, Ulrich, 60488 Frankfurt am Main (DE); WEBER, Markus, 60488 Frankfurt am Main (DE); WILDNER, Steffen, 60488 Frankfurt am Main (DE)
(74) Vertreter: Continental Corporation
(86) Internationale Anmeldenummer: PCT/EP2020/078569
(87) Internationale Veröffentlichungsnummer: WO 2021/074061

(56) Entgegenhaltungen:
- EP-A1- 2 434 197
- CN-B- 101 839 423
- CN-U- 201 607 597
- CN-U- 201 964 266

## Beschreibung

Die Erfindung betrifft ein Displaysystem mit einem Display, welches zur Anzeige von Daten ausgebildet ist, wobei das Display einen nicht zu einer Anzeige ausgebildeten inaktiven Displayrand und eine zur Anzeige ausgebildete aktive Displayinnenfläche aufweist, und
wobei das Displaysystem ferner ein Hintergrundbeleuchtungsmodul mit Leuchteinheiten aufweist, wobei das Hintergrundbeleuchtungsmodul an einer Rückseite des Displays direkt oder indirekt angeordnet ist, so dass das durch die Leuchteinheiten abgestrahlte Licht eine Hintergrundbeleuchtung für das Display ausbildet, und wobei das Hintergrundbeleuchtungsmodul einen zu dem Displayrand korrespondierenden Hintergrundbeleuchtungsrand und eine zu der aktiven Displayinnenfläche korrespondierende aktive Hintergrundbeleuchtungsinnenfläche aufweist und wobei das Displaysystem ferner ein Steuerungssystem zum Ansteuern der Leuchteinheiten aufweist. Ferner betrifft die Erfindung ein Fahrzeug mit einem solchen Displaysystem und ein Verfahren zum Betreiben eines Displaysystems.

Bei einem Flüssigkeitskristalldisplay, sogenannten LCDs, beruht dessen Funktion darauf, dass Flüssigkristalle die Polarisationsrichtung von Licht beeinflussen, wenn ein bestimmtes Maß an elektrischer Spannung angelegt wird. LCDs bestehen aus Bildelementen, sogenannten Pixeln, die unabhängig voneinander ihre Transparenz ändern können. Dazu wird durch eine elektrische Spannung in jedem Bildelement die Ausrichtung der Flüssigkristalle gesteuert. Dadurch ändert sich die Durchlässigkeit für polarisiertes Licht.

Polarisiertes Licht wird mittels auf dem Display angeordneten Polarisationsfiltern erzeugt, welche das einfallende Licht filtern. Soll ein Display beliebige Inhalte darstellen können, sind die Elemente in einem gleichmäßigen Raster (einer Matrix) angeordnet. Zur Erzeugung des einfallenden Lichtes werden Hintergrundbeleuchtungsmodule verwendet.
In den letzten Jahren sind als Hintergrundbeleuchtungsmodule eines LCD Flüssigkristalldisplays, LEDs (Leuchtdioden) anstelle konventioneller Kaltkathodenfluoreszenzlampen (CCFL) in Verwendung gekommen.

Diese auf der gesamten Fläche des Hintergrundbeleuchtungsmoduls verteilten Leuchtdioden bewirken die Ausleuchtung des Displays. Auch können Leuchtdioden separat angesteuert werden, so dass einzelne Teile der beleuchteten Fläche, die ein tiefes Schwarz darstellen sollen, separat gedimmt (local dimming) bzw. abgeschaltet werden können.

Die DE 10 2007 045 560 A1 offenbart eine Anzeigevorrichtung mit einer durchleuchtbaren Anzeige und einer Hinterleuchtungseinheit für die durchleuchtbare Anzeige, wobei die Hinterleuchtungseinheit einen Lichtleiter und seitlich an dem Lichtleiter angeordnete Lichtquellen aufweist, wobei mehrere Gruppen von Lichtquellen derart verschaltet sind, so dass die Lichtquellen einer Gruppe gemeinsam angesteuert werden und so dass eine Ansteuerung der Gruppen von Lichtquellen in Abhängigkeit von einem Bildinhalt der durchleuchtbaren Anzeige erfolgt.

Die DE 20 2011 000 857 U1 offenbart eine Display-Hintergrundbeleuchtungsanordnung zur Erhöhung der Farbsättigungs-, Helligkeits- und Weißabgleichsleistung, die in einem Hintergrundbeleuchtungsmodul untergebracht ist, um einem LCD-Modul eine Lichtquelle zur Verfügung zu stellen, mit einer Vielzahl von Leuchtzonen, die miteinander verbunden sind, wobei die Leuchtzone eine Farblichtquelleneinheit und eine Helligkeits-Lichtquelleneinheit aufweist, mit einem Steuergerät, das elektrisch an die Farblichtquelleneinheit und die Helligkeits-Lichtquelleneinheit angeschlossen ist, um die Farblichtquelleneinheit und die Helligkeits-Lichtquelleneinheit an- bzw. abzuschalten oder einzustellen.

Die CN 101 839 423 B offenbart ein Verfahren zur Verbesserung der Gleichmä-βigkeit der Leuchtdichte einer Leuchtdioden-Hintergrundbeleuchtungsquelle einer Flüssigkristallanzeige (LCD) und insbesondere ein Verfahren zur Erzielung einer LED-Hintergrundbeleuchtungsquelle mit gleichmäßiger Leuchtdichte über den Bildschirm durch ungleiche Beabstandung der LEDs. Um dunklen Randbereichen vorzubeugen wird in der LED-Hintergrundbeleuchtungsquelle der CN 101 839 423 B die Dichte der LEDs im Randbereich erhöht. CN 201 607 597 U offenbart eine Hintergrundbeleuchtung für eine LCD Anzeige mit einem Array von LEDs, die die Anzeigefläche der LCD Anzeige hinterleuchten. Um dunklen Randbereichen vorzubeugen werden streifenförmige LEDs im Randbereich um das Array von LEDs angeordnet, anstatt wie in CN 101 839 423 B einfach die Dichte der LEDs im Randbereich zu erhöhen. EP 2 434 197 A1 beschreibt eine LCD Anzeige mit direkter LED Hintergrundbeleuchtung. Die LEDs sind in einem Bereich mit hoher Dichte der LEDs angeordnet, in dem ein Anordnungsintervall der LEDs relativ klein ist, und in einem Bereich mit niedriger Dichte der LEDs angeordnet, in dem ein Anordnungsintervall der LEDs relativ groß ist, wobei der Bereich mit hoher LED-Dichte einem zentralen Bereich der Anzeigefläche entspricht und der Bereich mit niedriger LED-Dichte einem Peripheriebereich der Anzeigefläche entspricht. CN 201 964 266 U offenbart eine LCD Anzeige mit direkter Hintergrundbeleuchtung, wobei die LED Dichte in einem zentralen Anzeigebereich höher ist als in weiterer außen liegenden peripheren Anzeigebereichen.

Der Erfindung liegt die Aufgabe zugrunde ein Displaysystem mit einer verbesserten Displaydarstellung anzugeben.

Weitere Aufgaben sind die Angabe eines Verfahrens zum Betreiben eines solchen Displaysystems und die Angabe eines Fahrzeugs mit einem solchen Displaysystem.

Diese Aufgabe wird durch ein Displaysystem mit den Merkmalen des Anspruchs 1 und ein Fahrzeug mit den Merkmalen des Anspruchs 10 sowie ein Verfahren mit den Merkmalen des Anspruchs 11 gelöst.

In den Unteransprüchen sind weitere vorteilhafte Maßnahmen aufgelistet, die beliebig geeignet miteinander kombiniert werden können, um weitere Vorteile zu erzielen.

Die Aufgabe wird gelöst durch ein Displaysystem aufweisend ein Display, welches zur Anzeige von Daten ausgebildet ist, wobei das Display einen nicht zu einer Anzeige ausgebildeten inaktiven Displayrand und eine zur Anzeige ausgebildete aktive Displayinnenfläche aufweist,
ferner aufweisend ein Hintergrundbeleuchtungsmodul mit Leuchteinheiten, wobei das Hintergrundbeleuchtungsmodul an einer Rückseite des Displays direkt oder indirekt angeordnet ist, so dass das durch die Leuchteinheiten abgestrahlte Licht eine Hintergrundbeleuchtung für das Display ausbildet, und wobei das Hintergrundbeleuchtungsmodul einen zu dem Displayrand korrespondierenden Hintergrundbeleuchtungsrand aufweist und eine zu der aktiven Displayinnenfläche korrespondierende aktive Hintergrundbeleuchtungsinnenfläche aufweist,
ferner aufweisend ein Steuerungssystem zum Ansteuern der Leuchteinheiten, und wobei
ein Übergangsrandbereich, welcher sich von dem Hintergrundbeleuchtungsrand über einen Teil der Hintergrundbeleuchtungsinnenfläche erstreckt, vorgesehen ist, wobei in dem Übergangsrandbereich eine erste Anzahl von einzeln ansteuerbaren Leuchteinheiten angeordnet sind,
und wobei die Hintergrundbeleuchtungsinnenfläche ohne den Übergangsrandbereich eine zweite Anzahl von einzeln ansteuerbaren Leuchteinheiten aufweist, und wobei die erste Anzahl höher als die zweite Anzahl ist,
und/ oder das Steuerungssystem dazu ausgebildet ist, die Leuchteinheiten, welche in dem Übergangsrandbereich angeordnet sind, in erste Cluster zusammengeschaltet anzusteuern oder einzeln anzusteuern und die Leuchteinheiten, welche die Hintergrundbeleuchtungsinnenfläche ohne den Übergangsrandbereich aufweist, in zweite Cluster zusammengeschaltet anzusteuern, und wobei die Anzahl der zusammengeschalteten Leuchteinheiten in dem ersten Cluster kleiner ist als die Anzahl der zusammengeschalteten Leuchteinheiten in dem zweiten Cluster.

Es wurde erfindungsgemäß erkannt, dass bei einem herkömmlichen Hintergrundbeleuchtungsmodul die LEDs äquidistant angeordnet sind. Dadurch ist die Auflösung der Hintergrundbeleuchtung über die gesamte Fläche des Hintergrundbeleuchtungsmoduls gleich. Weiterhin wurde erkannt, dass eine Erhöhung der Auflösung durch eine Erhöhung der Anzahl der verwendeten LEDs über das gesamte Hintergrundbeleuchtungsmodul die Komplexität und vor allem die Kosten steigern würden.

Mittels der Erfindung wird dieses Problem nun gelöst. Erfindungsgemäß wird nur in dem Übergangsrandbereich, welcher sich von dem Hintergrundbeleuchtungsrand über einen Teil der Hintergrundbeleuchtungsinnenfläche erstreckt, eine erste Anzahl von einzeln ansteuerbaren Leuchteinheiten, angeordnet, während an der Hintergrundbeleuchtungsinnenfläche ohne den Übergangsrandbereich eine zweite Anzahl, welche niedriger ist als die erste Anzahl, von einzeln ansteuerbaren Leuchteinheiten angeordnet ist.

Dabei entspricht die zweite Anzahl vorzugsweise der ursprünglichen Anzahl eines herkömmlichen Hintergrundbeleuchtungsmoduls.

Ferner werden zusätzlich oder alternativ, während die Leuchteinheiten bei der Hintergrundbeleuchtungsinnenfläche ohne den Übergangsrandbereich in größeren Clustern (Gruppen) zusammengeschaltet werden, die Leuchteinheiten im Übergangsrandbereich in kleineren Gruppen zusammengeschaltet oder einzeln angesteuert. Die Auflösung der Hintergrundbeleuchtung wird somit durch eine Verkleinerung der gleichzeitig angesteuerten Leuchteinheiten erhöht. Die Local Dimming Algorithmen werden entsprechend der neuen modifizierten Dichte angepasst.

Durch die höhere Auflösung im Übergangsrandbereich lassen sich Details in der Displaydarstellung sehr lokal hinterleuchten. Dadurch werden benachbarte dunkle Bereiche weniger beleuchtet und der lokale Kontrast dadurch bei dem gesamten Display erhöht. Das führt dazu, dass sich die aktive Hintergrundbeleuchtungsinnenfläche und damit die aktive Displayinnenfläche weniger beispielsweise vom Schwarzdruck des Displayrandes unterscheidet.

Durch das erfindungsgemäße Displaysystem wird eine erhöhte lokale Auflösung der Hintergrundbeleuchtung erzielt. Der Übergang zwischen einer aktiven Displayinnenfläche des Displays und den Schwarzdruck des Deckglases, das heißt dem inaktiven Displayrand wird dabei so optimiert, dass der Fahrer dadurch nicht gestört wird. D.h. insbesondere die Hintergrundhelligkeit der schwarzen Bildbereiche des Displayrandes und im Display selber, werden minimiert. Ein Überstrahlen der angrenzenden Bereiche von schwarzen Bildbereichen und die dadurch entstehende störende Helligkeit der schwarzen Bildbereiche wird vermieden. Die bei der Displayinnenfläche vorgesehenen schwarzen Bildbereiche und der schwarze Displayrand bleiben somit schwarz. Somit wird der Kontrast der gesamten Displayfläche erhöht.

Vorzugsweise ist das Display als Flüssigkristall (LCD)-Display ausgebildet. LCD-Displays weisen vorzugsweise zwei übereinanderliegende und entlang der Ränder abgedichtete Glasscheiben auf, wobei die Flüssigkristalle in den so begrenzten Raum zwischen den beiden Glasplatten untergebracht sind. Mit elektrischer Spannung wird in jedem anzuzeigenden Bildelement die Ausrichtung der Flüssigkristalle gesteuert.

Weiterhin vorzugsweise sind die Leuchteinheiten in dem Übergangsrandbereich matrixförmig angeordnet. Dabei bedeutet matrixförmig, dass die Leuchteinheiten insbesondere gleichverteilt in Zeilen und Spalten angeordnet sind. Dadurch kann eine einheitliche Erhöhung des Kontrastes der Hintergrundbeleuchtung in dem Übergangsrandbereich bewirkt werden.

In bevorzugter Ausgestaltung sind die Leuchteinheiten in der Hintergrundbeleuchtungsinnenfläche ohne den Übergangsrandbereich matrixförmig angeordnet. Dabei bedeutet matrixförmig, dass die Leuchteinheiten insbesondere gleichverteilt in Zeilen und Spalten angeordnet sind. Dies bewirkt eine einheitliche Hintergrundbeleuchtung der Hintergrundbeleuchtungsinnenfläche ohne den Übergangsrandbereich.

Vorzugsweise sind im Hintergrundbeleuchtungsrand keine Leuchteinheiten oder im Vergleich zu dem Übergangsrandbereich und der Hintergrundbeleuchtungsinnenfläche ohne den Übergangsrandbereich eine reduzierte Anzahl von Leuchteinheiten angeordnet. Dadurch können die Kosten reduziert und der Kontrast erhöht werden.

In weiterer bevorzugter Ausgestaltung weist die Displayinnenfläche nicht sichtbare Bereiche auf, wobei in der dazu korrespondierenden Hintergrundbeleuchtungsinnenfläche keine Leuchteinheiten angeordnet sind.

Alternativ oder optional ergänzend weist die Displayinnenfläche nicht sichtbare Bereiche auf, wobei in der dazu korrespondierenden Hintergrundbeleuchtungsinnenfläche eine reduzierte Anzahl von Leuchteinheiten angeordnet sind. Dies bedeutet, dass in Bereichen, die nicht sichtbar sind, Leuchteinheiten weggelassen und/oder reduziert werden und somit Systemkosten eingespart werden. Nicht sichtbare Bereiche sind beispielsweise Bereiche auf der aktiven Displayinnenfläche, die beispielsweise durch mechanische Elemente kaschiert werden oder auf denen Bedienknöpfe angeordnet sind. In diesen dazu korrespondierenden Hintergrundbeleuchtungsinnenflächen können nun die Leuchteinheiten reduziert oder weggelassen werden, um somit Systemkosten zu sparen.

Weiterhin vorzugsweise sind die Leuchteinheiten als Leuchtdioden (LED) ausgebildet. Diese sind kostengünstig. Weiterhin vorzugsweise sind die Leuchtdioden einzeln dimmbar ausgestaltet. Dadurch kann eine weitere Kontrasterhöhung erzielt werden.

Ferner wird die Aufgabe gelöst durch ein Fahrzeug mit einem wie oben beschriebenen Displaysystem. Insbesondere ist das Fahrzeug ein PKW. Weiterhin insbesondere ist das Displaysystem in einem Kombiinstrument vorgesehen.

Ferner wird die Aufgabe gelöst durch ein Verfahren zum Betreiben eines Displaysystems umfassend der Schritte:
- Bereitstellen eines Displays, welches zur Anzeige von Daten ausgebildet ist, wobei das Display einen nicht zu einer Anzeige ausgebildeten inaktiven Displayrand und eine zur Anzeige ausgebildete aktive Displayinnenfläche aufweist,
- Bereitstellen eines Hintergrundbeleuchtungsmoduls mit Leuchteinheiten, wobei das Hintergrundbeleuchtungsmodul an einer Rückseite des Displays direkt oder indirekt angeordnet ist, so dass das durch die Leuchteinheiten abgestrahlte Licht eine Hintergrundbeleuchtung für das Display ausbildet, und wobei das Hintergrundbeleuchtungsmodul einen zu dem Displayrand korrespondierenden Hintergrundbeleuchtungsrand aufweist und eine zu der Displayinnenfläche korrespondierende Hintergrundbeleuchtungsinnenfläche aufweist,
- Bereitstellen eines Steuerungssystems zum Ansteuern der Leuchteinheiten,
- Bereitstellen eines Übergangsrandbereiches, welcher sich von dem Hintergrundbeleuchtungsrand über einen Teil der Hintergrundbeleuchtungsinnenfläche erstreckt,
- Betreiben einer ersten Anzahl von einzeln ansteuerbaren Leuchteinheiten welche in dem Übergangsrandbereich angeordnet sind,
- Betreiben einer zweiten Anzahl von einzeln ansteuerbaren Leuchteinheiten, welche in der Hintergrundbeleuchtungsinnenfläche ohne den Übergangsrandbereich angeordnet sind, wobei die erste Anzahl höher als die zweite Anzahl ist,
- und/oder Ansteuern von Leuchteinheiten einzeln oder zusammengeschaltet in ersten Clustern, welche in dem Übergangsrandbereich angeordnet sind, und zusammengeschaltet in zweiten Clustern, welche in der Hintergrundbeleuchtungsinnenfläche ohne den Übergangsrandbereich angeordnet sind, wobei die Anzahl der zusammengeschalteten Leuchteinheiten in dem ersten Cluster kleiner ist als die Anzahl der zusammengeschalteten Leuchteinheiten in dem zweiten Cluster.

Das Verfahren eignet sich vorzugsweise zur Durchführung auf einem erfindungsgemäßen Displaysystem. Die weiter oben in Bezug auf die erfindungsgemäßen Displaysystem beschriebenen Vorteile gelten sinngemäß auch für das erfindungsgemäße Verfahren.

Vorzugsweise werden im Hintergrundbeleuchtungsrand keine Leuchteinheiten oder im Vergleich zu dem Übergangsrandbereich und der Hintergrundbeleuchtungsinnenfläche ohne den Übergangsrandbereich eine reduzierte Anzahl von Leuchteinheiten angeordnet.

Weitere Eigenschaften und Vorteile der vorliegenden Erfindung ergeben sich aus der nachfolgenden Beschreibung unter Bezugnahme auf die beiliegenden Figuren. Darin zeigen schematisch:
- FIG 1:: ein erstes Ausführungsbeispiel eines erfindungsgemäßen Displaysystems,
- FIG 2:: eine erste Ausgestaltung eines erfindungsgemäßen Hintergrundbeleuchtungsmoduls,
- FIG 3:: eine zweite Ausgestaltung eines erfindungsgemäßen Hintergrundbeleuchtungsmoduls.

Obwohl die Erfindung im Detail durch die bevorzugten Ausführungsbeispiele näher illustriert und beschrieben wurde, ist die Erfindung nicht durch die offenbarten Beispiele eingeschränkt.

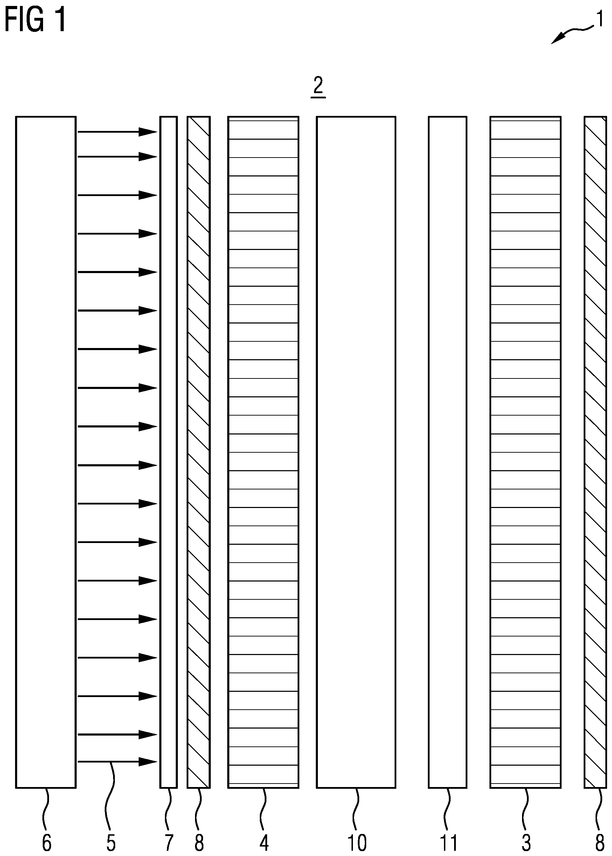

FIG 1 zeigt ein erstes Ausführungsbeispiel eines Displaysystems 1 gemäß der Erfindung. Dieses weist ein Flüssigkristall-Display 2 auf, welches zur Anzeige eines Bildes ausgestaltet ist. Da das Flüssigkristall-Display 2, im Gegensatz zu Plasma- oder OLED-Displays, nicht selbstleuchtend ist, muss die benötigte Helligkeit in den Farbelementen/Pixeln von einem Hintergrundbeleuchtungsmodul 6 mit LEDs 5 erzeugt werden.

Das Flüssigkristall-Display 2 weist ein Vorderglas 3 und ein Rückglas 4 auf. Das Vorderglas 3 und das Rückglas 4 dienen als Schutzschicht und als Träger für die LC (Flüssigkeit)-Zellen 10, welche nachfolgend noch genauer beschrieben werden.

Das Flüssigkristall-Display 2 weist vorzugsweise einen Diffusor 7 auf. Das vom Hintergrundbeleuchtungsmodul 6 erzeugte Licht hat eine räumliche Struktur. Die am Diffusor 7 hinter dem Flüssigkristall-Display 2 platzierten LEDs 5 haben eine vom Öffnungswinkel abhängige Strahlungsleistung. Mittels des Diffusors 7 wird diese räumliche Struktur gleichverteilt. Ferner umfasst das Flüssigkristall-Display 2 vorzugsweise noch Polarisationsfilter 8 zur Polarisation des Lichtes, welches von den LEDs 5 austritt.

Ferner umfasst das Displaysystem 1 noch eine nicht gezeigte Steuereinheit, welche die LEDs 5 einzeln ansteuern kann. Zusätzlich sind die LEDs 5 dimmbar ausgestaltet, welches ebenfalls durch die nicht gezeigte Steuereinheit geregelt werden kann. Die Steuereinheit kann beispielsweise das Steuergerät des Fahrzeugs sein.

Weiterhin umfasst das Flüssigkristall-Display 2 LC(Flüssigkristall) -Zellen 10 mit Flüssigkristallmolekülen. In diesen wird das linear polarisierte Licht so gedreht, dass die gewünschte Helligkeit in einem Farbelement erreicht wird. Dazu werden die Flüssigkristallmoleküle durch Anlegen einer Spannung zwischen zwei Elektroden in ihrer Ausrichtung beeinflusst.

Zudem umfasst das Flüssigkristall-Display 2 vorzugsweise noch einen Farbfilter 11. Mittels des Farbfilters wird die wahrgenommene Farbe eines Bildelements, bestimmt.

Ferner weist das Flüssigkristall-Display 2 noch einen Displayrand auf. Dazu kann beispielsweise das Vorderglas 3 mit einem schwarzen Rand als Displayrand bedruckt werden.

Das Flüssigkristall-Display 2 wird so aufgeteilt in einen inaktiven Displayrand, das heißt, dass hier kein Bild angezeigt wird und in eine aktive Displayinnenfläche, in welcher das darzustellende Bild angezeigt wird.

Ebenfalls können weitere inaktive Flächen vorhanden sein, welche beispielsweise durch angeordnete Bedienelemente auf dem Flüssigkristall-Display 2 entstehen können.

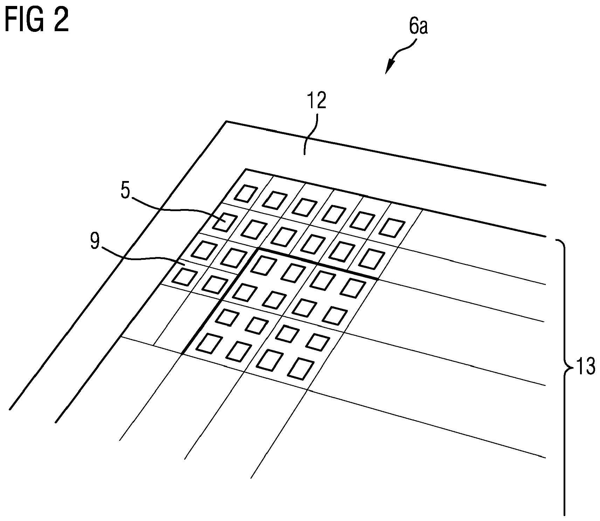

Das Hintergrundbeleuchtungsmodul 6 weist einen zu dem Displayrand korrespondierenden Hintergrundbeleuchtungsrand 12 (FIG 2) und eine zu der Displayinnenfläche korrespondierende Hintergrundbeleuchtungsinnenfläche 13 (FIG 2) auf.

Ferner ist ein Übergangsrandbereich 9 (FIG 2) vorgesehen, welcher sich von dem Hintergrundbeleuchtungsrand 12 (FIG 2) über einen Teil der Hintergrundbeleuchtungsinnenfläche 13 (FIG 2) erstreckt. Dieser weist eine erste Anzahl von ansteuerbaren LEDs 5 auf.

An der Hintergrundbeleuchtungsinnenfläche ohne den Übergangsrandbereich 9 (FIG 2) ist hingegen eine zweite Anzahl von einzeln ansteuerbaren LEDs 5 angeordnet. Dabei ist die erste Anzahl höher als die zweite Anzahl. Dadurch wird der Kontrast der Bilddarstellung erhöht.

Ferner können alternativ oder optional ergänzend die LEDs 5, welche in dem Übergangsrandbereich 9 (FIG 2) angeordnet sind, in erste Cluster zusammengeschaltet werden oder einzeln angesteuert werden und diejenigen LEDs 5, welche in der Hintergrundbeleuchtungsinnenfläche ohne den Übergangsrandbereich 9 (FIG 2) angeordnet sind, in zweite Cluster zusammengeschaltet werden, wobei die Anzahl der zusammengeschalteten LEDs 5 in den ersten Clustern kleiner ist als die Anzahl der zusammengeschalteten LEDs 5 in den zweiten Clustern.

Zudem können im Hintergrundbeleuchtungsrand 12 (FIG 2) oder in den zu den nicht sichtbaren Bereichen korrespondierenden Bereichen der Hintergrundbeleuchtungsinnenfläche 13 (FIG 2) keine oder lediglich eine reduzierte Anzahl von LEDs 5 angeordnet werden. Die Local Dimming Algorithmen werden entsprechend der modifizierten Anzahl an LEDs 5 angepasst.

Durch die höhere Auflösung im Übergangsrandbereich 9 (FIG 2) lassen sich Details auf der Displayinnenfläche sehr lokal hinterleuchten. Dadurch werden benachbarte dunkle Bereiche, beispielsweise der Displayrandbereich oder Bereiche in denen ein Bedienelement angeordnet ist, weniger beleuchtet, wodurch sich der lokale Kontrast erhöht. Das führt dazu, dass die aktive Displayinnenfläche sich weniger vom Schwarzdruck des Flüssigkristall-Displays 2 unterscheidet. Durch die Reduktion und/oder gar das Weglassen der LEDs 5 bei dem Hintergrundbeleuchtungsmodul 6 werden Systemkosten eingespart.

Der Übergang zwischen aktiver Displayinnenfläche des Flüssigkristall-Displays 2 und den schwarzen Bereichen des Displays, wird dahingehend optimiert, dass der Unterschied für den Fahrer nicht erkennbar ist. D.h. insbesondere wird die Hintergrundhelligkeit schwarzer Bildbereiche im Flüssigkristall-Display 2 minimiert.

FIG 2 zeigt eine detaillierte Ausgestaltung eines erfindungsgemäßen Hintergrundbeleuchtungsmoduls 6a.

Das Hintergrundbeleuchtungsmodul 6a weist einen Hintergrundbeleuchtungsrand 12 und eine Hintergrundbeleuchtungsinnenfläche 13 auf.

Zudem weist das Hintergrundbeleuchtungsmoduls 6a einen Übergangsrandbereich 9 auf, welcher sich von dem Hintergrundbeleuchtungsrand 12 über einen Teil der Hintergrundbeleuchtungsinnenfläche 13 erstreckt.

Ferner weist das Hintergrundbeleuchtungsmodul 6a zur Beleuchtung des Flüssigkristall-Displays 2 LEDs 5 auf.

Das Hintergrundbeleuchtungsmodul 6a weist an den Hintergrundbeleuchtungsrand 12 keine LEDs 5 auf. Ferner werden die LEDs 5, welche in dem Übergangsrandbereich 9 angeordnet sind, einzeln durch das Steuerungssystem (nicht gezeigt) gesteuert. Die LEDs 5 welche in /an der Hintergrundbeleuchtungsinnenfläche 13 ohne den Übergangsrandbereich 9 angeordnet sind, werden in Clustern, hier in Vierergruppen, gesteuert.

Während die LEDs 5 im Großteil der Hintergrundbeleuchtungsinnenfläche 13 daher in größeren Gruppen zusammengeschaltet werden, werden die LEDs 5 im Übergangsrandbereich 9 in kleineren Gruppen oder einzeln angesteuert. Dadurch wird eine lokale höhere Auflösung erzielt. Ein Überstrahlen von Schwarzbereichen wie beispielsweise dem Displayrand wird verhindert.

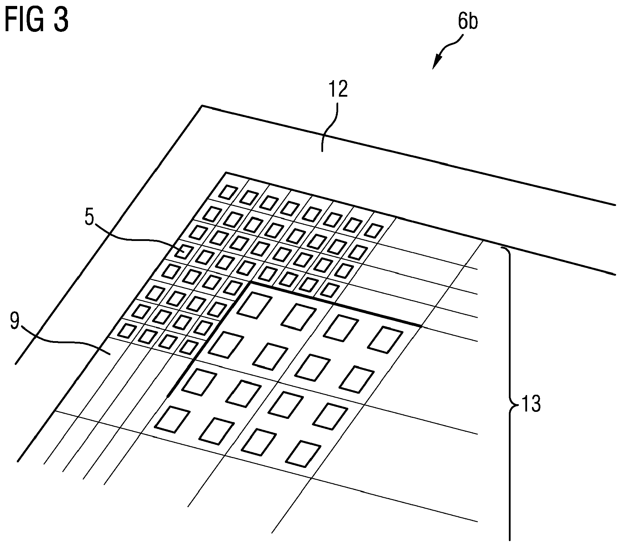

FIG 3 zeigt eine weitere detaillierte Ausgestaltung eines erfindungsgemäßen Hintergrundbeleuchtungsmoduls 6b. Dieses Hintergrundbeleuchtungsmodul 6b weist den Hintergrundbeleuchtungsrand 12 und die Hintergrundbeleuchtungsinnenfläche 13 auf.

Zudem weist das Hintergrundbeleuchtungsmodul 6b den Übergangsrandbereich 9 auf, welcher sich wiederum von dem Hintergrundbeleuchtungsrand 12 über einen Teil der Hintergrundbeleuchtungsinnenfläche 13 erstreckt.

Ferner weist das Hintergrundbeleuchtungsmoduls 6b LEDs 5 auf.

Das Hintergrundbeleuchtungsmodul 6b weist an dem Hintergrundbeleuchtungsrand 12 ebenfalls keine LEDs 5 auf. Ferner werden die LEDs 5, welche in dem Übergangsrandbereich 9 angeordnet sind, einzeln durch das Steuerungssystem (nicht gezeigt) gesteuert. Die LEDs 5 welche in /an der Hintergrundbeleuchtungsinnenfläche 13 ohne den Übergangsrandbereich 9 angeordnet sind, werden in Clustern, hier in Vierergruppen, gesteuert.

Zusätzlich sind in dem Übergangsrandbereich 9 eine erste Anzahl von einzeln ansteuerbaren LEDs 5 angeordnet; an der Hintergrundbeleuchtungsinnenfläche 13 ohne den Übergangsrandbereich 9 hingegen eine zweite Anzahl von einzeln ansteuerbaren Leuchteinheiten.

Dabei ist die erste Anzahl höher als die zweite Anzahl.

Die Auflösung des Hintergrundbeleuchtungsmodul 6b wird im Übergangsrandbereich 9 des Flüssigkristall-Display 2 (FIG 1) durch das Hinzufügen von den zusätzlichen LEDs 5 und durch eine einzelne Ansteuerung der LEDs 5 erhöht. Die Local Dimming Algorithmen werden entsprechend der modifizierten Dichte angepasst. In Bereichen, die nicht sichtbar sind, wie hier dem Hintergrundbeleuchtungsrand 12, werden die LEDs 5 weggelassen und somit Systemkosten eingespart.

Das erfindungsgemäße Displaysystem 1 (FIG 1) ist in allen Bereichen in denen ein Display Verwendung findet, beispielsweise in Bereichen der Consumer Elektronik, in der Luftfahrt, in Zügen, in der Medizintechnik einsetzbar.

## Patentansprüche

1. Displaysystem (1) aufweisend
ein Display, welches zur Anzeige von Daten ausgebildet ist, wobei das Display einen nicht zu einer Anzeige ausgebildeten inaktiven Displayrand und eine zur Anzeige ausgebildete aktive Displayinnenfläche aufweist,
ferner aufweisend ein Hintergrundbeleuchtungsmodul (6,6a, 6b) mit Leuchteinheiten, wobei das Hintergrundbeleuchtungsmodul (6,6a,6b) an einer Rückseite des Displays direkt oder indirekt angeordnet ist, so dass das durch die Leuchteinheiten abgestrahlte Licht eine Hintergrundbeleuchtung für das Display ausbildet, und wobei das Hintergrundbeleuchtungsmodul (6,6a,6b) einen zu dem Displayrand korrespondierenden Hintergrundbeleuchtungsrand (12) aufweist und eine zu der Displayinnenfläche korrespondierende Hintergrundbeleuchtungsinnenfläche (13) aufweist,
ferner aufweisend ein Steuerungssystem zum Ansteuern der Leuchteinheiten
**dadurch gekennzeichnet, dass**
ein Übergangsrandbereich (9), welcher sich von dem Hintergrundbeleuchtungsrand (12) über einen Teil der Hintergrundbeleuchtungsinnenfläche (13) erstreckt, vorgesehen ist, wobei in dem Übergangsrandbereich (9) eine erste Anzahl von einzeln ansteuerbaren Leuchteinheiten angeordnet sind,
und wobei die Hintergrundbeleuchtungsinnenfläche (13) ohne den Übergangsrandbereich (9) eine zweite Anzahl von einzeln ansteuerbaren Leuchteinheiten aufweist, wobei die erste Anzahl höher als die zweite Anzahl ist,
und/ oder das Steuerungssystem dazu ausgebildet ist, die Leuchteinheiten welche in dem Übergangsrandbereich (9) angeordnet sind, in erste Cluster zusammengeschaltet oder einzeln anzusteuern und die Leuchteinheiten, welche die Hintergrundbeleuchtungsinnenfläche ohne den Übergangsrandbereich (9) aufweist, in zweite Cluster zusammengeschaltet anzusteuern, wobei die Anzahl der zusammengeschalteten Leuchteinheiten in dem ersten Cluster kleiner ist als die Anzahl der zusammengeschalteten Leuchteinheiten in dem zweiten Cluster.

2. Displaysystem (1) nach Anspruch 1, **dadurch gekennzeichnet, dass** das Display als Flüssigkristall (LCD)-Display (2) ausgebildet ist.

3. Displaysystem (1) nach Anspruch 1 oder 2, **dadurch gekennzeichnet, dass** die Leuchteinheiten in dem Übergangsrandbereich (9) matrixförmig angeordnet sind.

4. Displaysystem (1) nach einem der vorhergehenden Ansprüche, **dadurch gekennzeichnet, dass**
die Leuchteinheiten in der Hintergrundbeleuchtungsinnenfläche (13) ohne den Übergangsrandbereich (9) matrixförmig angeordnet sind.

5. Displaysystem (1) nach einem der vorhergehenden Ansprüche, **dadurch gekennzeichnet, dass**
im Hintergrundbeleuchtungsrand (12) keine Leuchteinheiten oder im Vergleich zu dem Übergangsrandbereich (9) und der Hintergrundbeleuchtungsinnenfläche (13) ohne den Übergangsrandbereich (9) eine reduzierte Anzahl von Leuchteinheiten angeordnet sind.

6. Displaysystem (1) nach einem der vorhergehenden Ansprüche, **dadurch gekennzeichnet, dass**
die Displayinnenfläche nicht sichtbare Bereiche aufweist und in der dazu korrespondierenden Hintergrundbeleuchtungsinnenfläche (13) keine Leuchteinheiten angeordnet sind.

7. Displaysystem (1) nach einem der vorhergehenden Ansprüche, **dadurch gekennzeichnet, dass**
die Displayinnenfläche nicht sichtbare Bereiche aufweist und in der dazu korrespondierenden Hintergrundbeleuchtungsinnenfläche (13) eine reduzierte Anzahl von Leuchteinheiten angeordnet sind.

8. Displaysystem (1) nach einem der vorhergehenden Ansprüche, **dadurch gekennzeichnet, dass**
die Leuchteinheiten als Leuchtdioden (LED) (5) ausgebildet sind.

9. Displaysystem (1) nach Anspruch 8, **dadurch gekennzeichnet, dass** die Leuchtdioden (5) einzeln dimmbar ausgestaltet sind.

10. Fahrzeug mit einem Displaysystem (1) nach einem der vorhergehenden Ansprüche.

11. Verfahren zum Betreiben eines Displaysystems (1) **gekennzeichnet durch** die Schritte:
- Bereitstellen eines Displays, welches zur Anzeige von Daten ausgebildet ist, wobei das Display einen nicht zu einer Anzeige ausgebildeten inaktiven Displayrand und eine zur Anzeige ausgebildete aktive Displayinnenfläche aufweist,
- Bereitstellen eines Hintergrundbeleuchtungsmoduls (6, 6a, 6b) mit Leuchteinheiten, wobei das Hintergrundbeleuchtungsmodul (6, 6a, 6b) an einer Rückseite des Displays direkt oder indirekt angeordnet ist, so dass das durch die Leuchteinheiten abgestrahlte Licht eine Hintergrundbeleuchtung für das Display ausbildet, und wobei das Hintergrundbeleuchtungsmodul (6,6a,6b) einen zu dem Displayrand korrespondierenden Hintergrundbeleuchtungsrand (12) aufweist und eine zu der Displayinnenfläche korrespondierende Hintergrundbeleuchtungsinnenfläche (13) aufweist,
- Bereitstellen eines Steuerungssystems zum Ansteuern der Leuchteinheiten,
- Bereitstellen eines Übergangsrandbereiches (9), welcher sich von dem Hintergrundbeleuchtungsrand (12) über einen Teil der Hintergrundbeleuchtungsinnenfläche (13) erstreckt,
- Betreiben einer ersten Anzahl von einzeln ansteuerbaren Leuchteinheiten, welche in dem Übergangsrandbereich (9) angeordnet sind
- Betreiben einer zweiten Anzahl von einzeln ansteuerbaren Leuchteinheiten, welche in der Hintergrundbeleuchtungsinnenfläche (13) ohne den Übergangsrandbereich (9) angeordnet sind, wobei die erste Anzahl höher als die zweite Anzahl ist,
- und/oder Ansteuern von Leuchteinheiten einzeln oder zusammengeschaltet in ersten Clustern, welche in dem Übergangsrandbereich angeordnet sind, und zusammengeschaltet in zweiten Clustern, welche in der Hintergrundbeleuchtungsinnenfläche ohne den Übergangsrandbereich angeordnet sind, wobei die Anzahl der zusammengeschalteten Leuchteinheiten in dem ersten Cluster kleiner ist als die Anzahl der zusammengeschalteten Leuchteinheiten in dem zweiten Cluster.

12. Verfahren zum Betreiben eines Displaysystems (1) nach Anspruch 11,
**dadurch gekennzeichnet, dass**
im Hintergrundbeleuchtungsrand (12) keine Leuchteinheiten oder im Vergleich zu den Übergangsrandbereich (9) und der Hintergrundbeleuchtungsinnenfläche (13) ohne den Übergangsrandbereich (9) eine reduzierte Anzahl von Leuchteinheiten angeordnet werden.

## Claims

1. Display system (1) comprising
a display configured for displaying data, wherein the display comprises an inactive display edge not configured for displaying, and an active display inner surface configured for displaying,
furthermore comprising a backlighting module (6,6a,6b) having luminous units, wherein the backlighting module (6,6a,6b) is arranged directly or indirectly at a rear side of the display, such that the light emitted by the luminous units forms a backlight for the display, and wherein the backlighting module (6,6a,6b) comprises a backlighting edge (12) corresponding to the display edge and comprises a backlighting inner surface (13) corresponding to the display inner surface,
furthermore comprising a control system for driving the luminous units,
**characterized in that**
a transition edge region (9) extending from the backlighting edge (12) over a portion of the backlighting inner surface (13) is provided, wherein a first number of individually driveable luminous units are arranged in the transition edge region (9),
and wherein the backlighting inner surface (13) without the transition edge region (9) comprises a second number of individually driveable luminous units, wherein the first number is higher than the second number,
and/or the control system is configured to drive the luminous units arranged in the transition edge region (9) individually or with said luminous units interconnected in first clusters, and to drive the luminous units comprised by the backlighting inner surface without the transition edge region (9) with said luminous units interconnected in second clusters, wherein the number of interconnected luminous units in the first cluster is lower than the number of interconnected luminous units in the second cluster.

2. Display system (1) according to Claim 1, **characterized in that** the display is configured as a liquid crystal (LCD) display (2).

3. Display system (1) according to Claim 1 or 2, **characterized in that**
the luminous units in the transition edge region (9) are arranged in a matrix-shaped fashion.

4. Display system (1) according to any of the preceding claims, **characterized in that**
the luminous units in the backlighting inner surface (13) without the transition edge region (9) are arranged in a matrix-shaped fashion.

5. Display system (1) according to any of the preceding claims, **characterized in that**
no luminous units or, in comparison with the transition edge region (9) and the backlighting inner surface (13) without the transition edge region (9), a reduced number of luminous units are arranged in the backlighting edge (12).

6. Display system (1) according to any of the preceding claims, **characterized in that**
the display inner surface comprises non-visible regions and no luminous units are arranged in the backlighting inner surface (13) corresponding to said regions.

7. Display system (1) according to any of the preceding claims, **characterized in that**
the display inner surface comprises non-visible regions and a reduced number of luminous units are arranged in the backlighting inner surface (13) corresponding to said regions.

8. Display system (1) according to any of the preceding claims, **characterized in that**
the luminous units are configured as light emitting diodes (LEDs) (5).

9. Display system (1) according to Claim 8, **characterized in that** the light emitting diodes (5) are designed to be individually dimmable.

10. Vehicle comprising a display system (1) according to any of the preceding claims.

11. Method for operating a display system (1), **characterized by** the following steps:
- providing a display configured for displaying data, wherein the display comprises an inactive display edge not configured for displaying, and an active display inner surface configured for displaying,
- providing a backlighting module (6,6a,6b) having luminous units, wherein the backlighting module (6,6a,6b) is arranged directly or indirectly at a rear side of the display, such that the light emitted by the luminous units forms a backlight for the display, and wherein the backlighting module (6,6a,6b) comprises a backlighting edge (12) corresponding to the display edge and comprises a backlighting inner surface (13) corresponding to the display inner surface,
- providing a control system for driving the luminous units,
- providing a transition edge region (9) extending from the backlighting edge (12) over a portion of the backlighting inner surface (13),
- operating a first number of individually driveable luminous units arranged in the transition edge region (9),
- operating a second number of individually driveable luminous units arranged in the backlighting inner surface (13) without the transition edge region (9), wherein the first number is higher than the second number,
- and/or driving luminous units individually or with said luminous units interconnected in first clusters, which are arranged in the transition edge region, and interconnected in second clusters, which are arranged in the backlighting inner surface without the transition edge region, wherein the number of interconnected luminous units in the first cluster is lower than the number of interconnected luminous units in the second cluster.

12. Method for operating a display system (1) according to Claim 11, **characterized in that**
no luminous units or, in comparison with the transition edge region (9) and the backlighting inner surface (13) without the transition edge region (9), a reduced number of luminous units are arranged in the backlighting edge (12).

## Revendications

1. Système d'affichage (1), possédant
un afficheur, lequel est configuré pour afficher des données, l'afficheur possédant un bord d'afficheur inactif, non configuré pour un affichage, et une surface intérieure d'afficheur active, configurée pour l'affichage,
possédant en outre un module de rétroéclairage (6, 6a, 6b) comprenant des unités d'éclairage, le module de rétroéclairage (6, 6a, 6b) étant disposé directement ou indirectement au niveau d'un côté arrière de l'afficheur, de sorte que la lumière émise par les unités d'éclairage forme un rétroéclairage pour l'afficheur, et le module de rétroéclairage (6, 6a, 6b) possédant un bord de rétroéclairage (12) correspondant au bord d'afficheur et une surface intérieure de rétroéclairage (13) correspondant à la surface intérieure d'afficheur,
possédant en outre un système de commande destiné à commander les unités d'éclairage
**caractérisé en ce que**
une zone de transition (9), laquelle s'étend du bord de rétroéclairage (12) sur une partie de la surface intérieure de rétroéclairage (13), est présente, un premier nombre d'unités d'éclairage commandables individuellement étant présentes dans la zone de transition (9), et la surface intérieure de rétroéclairage (13) sans la zone de transition (9) possédant un deuxième nombre d'unités d'éclairage commandables individuellement, le premier nombre étant supérieur au deuxième nombre,
et/ou le système de commande est configuré pour commander les unités d'éclairage, qui sont disposées dans la zone de transition (9), interconnectées en une première grappe ou individuellement et pour commander les unités d'éclairage, que possède la surface intérieure de rétroéclairage sans la zone de transition (9), interconnectées en une deuxième grappe, le nombre d'unités d'éclairage interconnectées dans la première grappe étant inférieur au nombre d'unités d'éclairage interconnectées dans la deuxième grappe.

2. Système d'affichage (1) selon la revendication 1, **caractérisé en ce que** l'afficheur est réalisé sous la forme d'un afficheur à cristaux liquides (LCD) (2).

3. Système d'affichage (1) selon la revendication 1 ou 2, **caractérisé en ce que** les unités d'éclairage dans la zone de transition (9) sont arrangées en forme de matrice.

4. Système d'affichage (1) selon l'une des revendications précédentes, **caractérisé en ce que** les unités d'éclairage dans la surface intérieure de rétroéclairage (13) sans la zone de transition (9) sont arrangées en forme de matrice.

5. Système d'affichage (1) selon l'une des revendications précédentes, **caractérisé en ce qu'**aucune unité d'éclairage, ou un nombre réduit d'unités d'éclairage par rapport à la zone de transition (9) et à la surface intérieure de rétroéclairage (13) sans la zone de transition (9), sont disposées dans le bord de rétroéclairage (12).

6. Système d'affichage (1) selon l'une des revendications précédentes, **caractérisé en ce que** la surface intérieure d'afficheur possède des zones non visibles et aucune unité d'éclairage n'est disposée dans la surface intérieure de rétroéclairage (13) correspondant à celles-ci.

7. Système d'affichage (1) selon l'une des revendications précédentes, **caractérisé en ce que** la surface intérieure d'afficheur possède des zones non visibles et un nombre réduit d'unités d'éclairages sont disposées dans la surface intérieure de rétroéclairage (13) correspondant à celles-ci.

8. Système d'affichage (1) selon l'une des revendications précédentes, **caractérisé en ce que** les unités d'éclairage sont réalisées sous la forme de diodes électroluminescentes (LED) (5).

9. Système d'affichage (1) selon la revendication 8, **caractérisé en ce que** les diodes électroluminescentes (5) sont configurées à intensité variable individuellement.

10. Véhicule comprenant un système d'affichage (1) selon l'une des revendications précédentes.

11. Procédé pour faire fonctionner un système d'affichage (1), **caractérisé par** les étapes suivantes :
- fourniture d'un afficheur, lequel est configuré pour afficher des données, l'afficheur possédant un bord d'afficheur inactif, non configuré pour un affichage, et une surface intérieure d'afficheur active, configurée pour l'affichage,
- fourniture d'un module de rétroéclairage (6, 6a, 6b) comprenant des unités d'éclairage, le module de rétroéclairage (6, 6a, 6b) étant disposé directement ou indirectement au niveau d'un côté arrière de l'afficheur, de sorte que la lumière émise par les unités d'éclairage forme un rétroéclairage pour l'afficheur, et le module de rétroéclairage (6, 6a, 6b) possédant un bord de rétroéclairage (12) correspondant au bord d'afficheur et une surface intérieure de rétroéclairage (13) correspondant à la surface intérieure d'afficheur,
- fourniture d'un système de commande destiné à commander les unités d'éclairage,
- fourniture d'une zone de transition (9), laquelle s'étend du bord de rétroéclairage (12) sur une partie de la surface intérieure de rétroéclairage (13),
- mise en fonctionnement d'un premier nombre d'unités d'éclairage commandables individuellement, lesquelles sont disposées dans la zone de transition (9),
- mise en fonctionnement d'un deuxième nombre d'unités d'éclairage commandables individuellement, lesquelles sont disposées dans la surface intérieure de rétroéclairage (13) sans la zone de transition (9), le premier nombre étant supérieur au deuxième nombre,
- et/ou commande des unités d'éclairage, qui sont disposées dans la zone de transition (9), individuellement ou interconnectées en des premières grappes et de celles qui sont disposées dans la surface intérieure de rétroéclairage sans la zone de transition, interconnectées en des deuxièmes grappes, le nombre d'unités d'éclairage interconnectées dans la première grappe étant inférieur au nombre d'unités d'éclairage interconnectées dans la deuxième grappe.

12. Procédé pour faire fonctionner un système d'affichage (1) selon la revendication 11, **caractérisé en ce qu'**aucune unité d'éclairage, ou un nombre réduit d'unités d'éclairage par rapport à la zone de transition (9) et à la surface intérieure de rétroéclairage (13) sans la zone de transition (9), sont disposées dans le bord de rétroéclairage (12).
